# EUROPEAN PATENT SPECIFICATION

(11) **EP 0 677 249 B1**
(45) Date of publication and mention of the grant of the patent: **23.05.2001**
(21) Application number: 95102947.9
(22) Date of filing: 02.03.1995
(51) Int. Cl.: A23L 1/237, A23J 3/32, A23L 1/227

(54) **Salt enhanced foods**
Durch Salz verbesserte Lebensmittel
Aliments améliorés par l'apport de sel

(30) Priority: 15.04.1994 US 228103
(43) Date of publication of application: 18.10.1995
(73) Proprietor: SOCIETE DES PRODUITS NESTLE S.A., 1800 Vevey (CH)
(72) Inventor: Guerrero, Arturo, New Milford, Connecticut 06776 (US); Kwon, Steven Soon-Young, New Milford, Connecticut 06776 (US); Vadehra, Dharam Vir, New Milford, Connecticut 06776 (US)
(74) Representative: Pate, Frederick George

(56) References cited:
- EP-A- 0 363 771
- WO-A-87/03174
- GB-A- 1 071 248
- US-A- 4 243 691
- US-A- 4 451 494
- DATABASE WPI Week 8635 Derwent Publications Ltd., London, GB; AN 86-227530 & HU-A-38 803 (KOZPONTI ELELMISZER ET AL.) , 28 July 1986
- DATABASE WPI Week 8731 Derwent Publications Ltd., London, GB; AN 87-217628 & JP-A-62 143 697 (FUJI OIL KK) , 26 June 1987

## Description

The present invention relates to salt and flavour enhanced foods, more particularly to food compositions containing modified protein sources as salt and flavour enhancers.

Excessive dietary sodium intake, the primary source of which is sodium chloride or table salt in foods, has long been suspected as a source of a number of health problems. Consequently a reduction in sodium consumption would imply benefits for the health of most people. However, the inclusion of sodium chloride in the diet contributes a good deal to the palatability of foods, and food without salt is perceived to be tasteless, flat and unpalatable.

Heretofore, a number of sodium-free compositions have been suggested as salt substitutes to replace sodium chloride in foods while retaining the palatability of the food.

Examples of such salt substitutes are disclosed in US patent Nos. 2,471,144; 2,601,112; 3,782,974; 4,243,691; 4,340,614; and 4,451,494. Among the most popular salt substitutes are potassium chloride, ammonium chloride and mixtures thereof. However, such salt substitutes suffer from a number of disadvantages, including off-taste or bitter flavor, a taste perception different and less than sodium chloride, as well as sourness. Typically a number of other components must be included to mask the bitterness which the salt substitute, such as potassium or ammonium chloride imparts, such as the combination with potassium chloride of calcium and magnesium formate and citrate salts, sugar, choline citrate, hydrolysed animal protein, and lactate or lactic salt.

Another procedure which has been suggested for reducing sodium intake is to incorporate salt taste enhancers in foods and beverages. That is, compounds which enhance the taste of sodium chloride in foods and beverages so that the sodium chloride content thereof may be reduced without adversely affecting the desired salty taste of the food. For example, US patent No 4,997,672 and the prior art discussed therein, disclose the use of substances such as cationic surfactants, bretylium tosylate, certain polypeptides, and the like as salt taste enhancers.

We have found that the product of the proteolysis of a protein source such as egg white, gelatin or other protein source which, upon hydrolysis, is capable of producing free basic amino acids, when added to a food or beverage containing less than a normal amount of sodium chloride, will enhance the salty taste and, in some cases, the flavour of the food or beverage.

Accordingly, the present invention provides a process for enhancing the salty taste of a food or beverage containing a less than normal amount of sodiuum chloride which comprises adding to the said food or beverage a sodium chloride taste enhancing amount of a proteolysed protein source.

The protein source may be any protein source or mixture thereof which, upon hydrolysis, is capable of producing free basic amino acids and may be, for instance, egg white, gelatin, soy protein, wheat protein, corn protein, fish protein, milk protein or meat protein.

Although the protein source may be hydrolysed in a single stage under neutral, acid or alkaline conditions, the protein source is preferably proteolysed in two separate stages. The proteolysis may be carried out under acid conditions and under alkaline conditions sequentially in any order. The protein source may be fresh, frozen or dehydrated. The proteolysed protein source contains free amino acids together with a certain quantity of peptides of diverse length depending on the protein source and the protease used.

The acid proteolysis is conveniently carried out at a pH of from 1 to 6, preferably from 1.5 to 5 and especially from 2 to 4. The temperature at which the acid proteolysis is carried out may be from 0°C to 65°C, preferably from 40°C to 60 °C and especially from 45°C to 55°C.

The adjustment of the pH of the protein source for the acid proteolysis may be effected by any suitable food acceptable acidulant such as HCl, acetic acid, lactic acid, citric acid or phosphoric acid.

Any protease capable of acting under acid conditions may be used for the acid proteolysis e.g. acid protease, Biocon or Amano. The amount of protease used for the acid proteolysis may be from 0.005 to 4%, preferably from 0.02 to 1% and especially from 0.05 to 0.5% by weight based on the weight of the protein source.

The duration of the acid proteolysis may vary widely depending, for example, on the particular protease used, the concentration of the protease and the temperature. For example, the duration of the acid proteolysis may be from 2 to 48 hours or more, but typically the time ranges from 8 to 24 hours, and preferably form 12 to 20 hours.

The alkaline proteolysis is conveniently carried out at a pH of from 6 to 12, preferably from 6.5 to 9 and especially from 7 to 8.

Any protease capable of acting under alkaline conditions may be used for the alkaline proteolysis e.g. Alkalase, Novo, Neutrase.

The amount of protease used for alkaline proteolysis may be from 0.005 to 4%, preferably from 0.02 to 1% and especially form 0.05 to 0.5% by weight based on the weight of the protein source.

The temperature at which the alkaline proteolysis is carried out may be from 0°C to 70°, preferably from 20° to 65°C and especially from 50° to 60°C.

The duration of the alkaline proteolysis may vary widely depending, for example, on the particular protease used, the concentration of the protease and the temperature. For example, the duration of the alkaline proteolysis may be from 10 minutes to 24 hours or more, but typically the time ranges from 30 minutes to 6 hours and preferably from 1 to 4 hours.

Any suitable food acceptable alkalis, such as ammonium hydroxide, sodium hydroxide, potassium hydroxide, sodium citrate or disodium phosphate, may be used to control the pH of the protein source during alkaline hydrolysis.

Conveniently, for the acid hydrolysis, the protein source may be added to an aqueous solution of the protease, either in powder form or as an aqueous solution. Advantageously, the protein source and the protease are dissolved in water, for instance, by agitation. The concentration of the protein source in the aqueous solution may be from 5 to 40%, preferably from 10 to 30% and especially from 15 to 25% by weight based on the weight of the solution. Conveniently, the pH is adjusted by acid at the end of the dissolution of the protein source.

Conveniently, for the alkaline hydrolysis, the protein source may be added to an aqueous solution of the protease, either in powder form or as an aqueous solution. Advantageously, the protein source and the protease are dissolved in water, for instance, by agitation. The concentration of the protein source in the aqueous solution may be from 5 to 40%, preferably from 10 to 30% and especially from 15 to 25% by weight based on the weight of the solution. Conveniently, the pH of the solution of the protein source and the protease may be adjusted by alkali to the desired value before, during or after the dissolution of the protein source.

Between the first and second proteolysis stage, depending on the protease selected for the first stage, the pH is adjusted for the second proteolysis stage.

After the termination of both stages of the proteolysis carried out with the acid and alkaline proteases, depending on the nature of the protein source for producing salt enhancer upon proteolysis and depending on the order of the protease reactions, an acid or an alkali may be added to produce the corresponding salt e.g. at a pH of 5.5 to 7.5, preferably at a pH of 6.5 to 7.4. In addition or alternatively a salt may be added to increase the salt concentration, advantageously by adding an acid and an alkali to the proteolysed protein source to form the respective salt at a pH from 4 to 9, preferably from 5 to 8 and especially from 6 to 7. The alkali may be any suitable food acceptable alkali such as ammonium hydroxide, sodium hydroxide, potassium hydroxide, sodium citrate or disodium phosphate and preferably ammonium hydroxide. The acid may be any suitable food acceptable acid such as hydrochloride acid, acetic acid, lactic acid, citric acid and preferably phophoric acid. The addition of ammonium hydroxide and phosphoric acid to form ammonium phosphate is particularly advantageous. It should be understood that the salt added or formed in this invention should not be sodium chloride.

Conveniently, the proteolyzed solution may be pasteurized to inactivate the protease, e.g. at a temperature from 70 to 120°C, preferably form 80 to 110°C, and especially from 90 to 100°C. The pasteurization may be carried out for a period of from 3 to 30 minutes, preferably from 5 to 20 minutes and especially from 10 to 15 minutes. The pasteurization may be carried out by steam injection or heat exchanger, preferably a shell and tube or a plate and frame heat exchanger.

After pasteurization, the product, which is usually a liquid or liquid-like product, can be either used as it is, dried or separated. If the pasteurised product is dried, the drying is preferably carried out by spray drying. After drying, the product may be cooled and stored at room temperature. If the pasteurised product is separated, the separation process may be carried out by filtration, in all its variants, and preferably centrifugation, especially using a disc centrifugal clarifier.

Conveniently the liquid phase obtained after separation may be used as it is, concentrated by vacuum evaporation or, preferably drying by spray drying.

The proteolyzed protein source, either alone or in combination with the salt formed by addition of an acid and an alkali to the proteolyzed protein source are effective in enhancing the salty taste of food and beverages even when incorporated at relative low levels. Depending upon the product in application, the proteolyzed protein source, either alone or in combination with the salt formed by addition of an acid and alkali to the proteolyzed protein source may be advantageously used also as a flavor enhancer in food and beverages even when incorporated at relatively low levels. For example, the salty taste and flavor of foods and beverages is significantly enhanced by the incorporation therein of proteolyzed protein source, or sources, plus the salt formed by the addition of an acid and an alkali at levels as low as 0.1% by weight on the weight of a food or beverage.

Thus, the salt taste and flavor enhancers of the present invention allow the sodium chloride content of a food or beverage to be reduced without adversly affecting the desired salty taste or flavor of the product in application. It is to be understoood that the salt taste and flavor enhancers of this invention are not salt substitutes or flavor substitutes and do not completely replace sodium chloride in the food or beverage. However, even though the products of the present invention provide a salty taste and are flavorless, they require a minimum level of sodium chloride or other salt in the food or beverage e.g. 0.20% by weight based on the weight of food.

For example, the salty taste of foods such as low sodium chicken broth, soups, salad dressing, sauces, mayonnaise, cooked ground beef, oat-meal, and the like, containing a less than normal amount of sodium chloride but preferably a minimum level of at least 0.20%, is significantly enhanced by the addition of proteolysed protein source, or sources either alone or in combination with a salt formed by addition of an acid and an alkali to the proteolized protein source in powder form in an amount as low as 0.1% by weight based on the weight of food or beverage.

Amounts up to about 3% or more of the powder may of course, be used but, preferably, the amount of powder used is from 0.1% to 0.5% by weight based on the weight of food or beverage.

The separated liquid or the unseparated liquid product of the protolyzed protein source, or sources, preferably but not necessarly in combination with a salt formed by the addition of an acid and an alkali to the proteolyzed protein source may also be used and, preferably, the amounts used are from 0.1 to 3% by weight based on the weight of food or beverages.

The present invention also provides a process for preparing a salty tasting food or beverage containing a reduced amount of sodium chloride which comprises formulating a food or beverage with a reduced amount of sodium chloride less than is necessary to achieve a desired salty taste in said food or beverage, and enhancing the sodium chloride taste in said reduced sodium chloride content food or beverage by adding thereto a proteolysed protein source.

Preferably, the proteolyzed protein source is added in combination with the salt formed by the addition of an acid and an alkali to the proteolyzed protein source.

The above process may also enhance the flavor of the food or beverage.

The present invention further provides a composition enhanced in sodium chloride taste, which comprises a food or beverage containing a less then normal amount of sodium chloride, and a sodium chloride taste enhancing amount of a proteolyzed protein source.

Preferably, the composition comprises the proteolyzed protein source together with the salt formed by addition of an acid and an alkali to the proteolyzed protein source.

The composition may also have an enhanced flavor.

The following Examples further illustrate the present invention.

### Example 1

1.7 kg of egg white were dissolved in 9.0 kg of water at ambient temperature and mixed at 150 rpm. 160 ml of 85% phosphoric acid having a specific gravity of 1.70 were added to adjust the pH to 3. 2.3 g of acid protease (Biocon) were added and the acidified mixture was stirred at 250 rpm at 50°C for 16 hours in a fermenter. The proteolysed product was transferred to a glass reactor and 1200 ml of 28-30% ammonium hydroxide having a specific gravity of 0.90 were added to adjust the pH to 9.6. 2.3 g of alcalase Novo were added and the alkaline mixture was stirred at 150 rpm at 58°C for 2 hours in a glass reactor. A further 1000 ml of 85% phosphoric acid having a specific gravity of 1.70 were added to adjust the pH to 5.6 and the mixture was heated in hot water for 10 minutes at 121°C.

The heated solution was pre-filtered with a Buchner funnel (Whatman ≠ 54 filter paper) and then vacuum filtered to give a filtrate having a solids content of 24.24% by weight.

The liquid filtrate was then evaporated for 15 minutes under the following conditions:

| | |
|---|---|
| Product initial temperature | 10°C |
| Product final temperature | 37°C |
| Vacuum | 635 mm Hg |

The solids content after evaporation was 45.46% by weight.

The evaporated product was then spray dried in a Niro Spray Drier under the following conditions:

| | |
|---|---|
| Air pressure | 6 kg/cm ² |
| Air inlet temperature | 150°C |
| Air outlet temperature | 90°C |
| Product inlet temperature | 36°C |
| Flow rate of product temperature of 90°C | set to obtain an outlet |

The final mass of the product was 1.57 kg and the amount of water evaporated was 2.210 kg.

The degree of hydrolysis was measured according to the OPA method of samples taken before enzyme addition and after spray drying. The final results are expressed as free amino groups per gram of powder.

| | |
|---|---|
| Initial sample | 5.22 x 10⁻⁴ mol of free amino groups per gram of powder |
| Final sample | 1.56 x 10⁻³ mol of free amino groups per gram of powder |

### Example 2

A typical low-cost cheese sauce contains approximately 1.6% by wt. sodium chloride. In order to demonstrate the effectiveness of the salt taste enhancers of the present invention, a comparable low-cost cheese sauce was formulated containing 0.5% sodium chloride, and was used as a control. To one aliquot of this control cheese sauce was added 0.25% by weight of the spray dried proteolysed egg white prepared in Example 1, in the amounts indicated. The control cheese sauce and the sauce to which the salt enhancers had been added were then evaluated by a sensory panel consisting of eight trained judges who were of the opinion that proteolysed egg white significantly amplified the sodium chloride taste.

### Example 3

2.25 kg of gelatin were dissolved in 11.270 kg of water at ambient temperature in a metal reactor. The pH of this solution was adjusted with ammonium hydroxide (28%) to 7.5 and the temperature adjusted to 50°C by indirect heating with steam. Then, 4 g of the protease Neutrase (Novo) were added under continuous agitation at 200 rpm. The proteolysis was carried out for 4 hours at 50°C under continuous addition of ammonium hydroxide to maintain the pH at 7.5. After 4 hours of proteolysis, the pH of the solution was adjusted to 2.5 with phosphoric acid (85%) and 3 g of acid protease (Biocon) were added. The acid proteolysis was carried out for 16 hours, at 200 rpm, 50°C and continuous addition of phosphoric acid to maintain the pH between 2.5 and 3.0. After 16 hours reaction, the hydrolysed gelatin solution was heated up to 90°C for 15 minutes, to inactivate the proteases, cooled down to 50°C, and the pH adjusted to 7.0 with ammonium hydroxide. The total amounts of ammonium hydroxide and phosphoric acid used for pH adjustment were 120 ml and 220 ml, respectively.

The product of the proteolysis was sprayed dried under the following conditions:

| | |
|---|---|
| Product Inlet Temperature | 50°C |
| Product Outlet Temperature | 85°C |
| Air Inlet Temperature | 140°C |
| Air Outlet Temperature | 85°C |

The final moisture content of the proteolyzed gelatin was 2.0%.

### Example 4

850 g of water, added to a glass reactor, were heated to 58°C and the pH adjusted to 3.0 with phosphoric acid. To this solution 3.0 g of acid protease (Biocon) were added under agitation (280 rpm). After 5 minutes of mixing, 220 g of soy protein were added and the proteolysis carried out for 5 hours at 57°C, 200 rpm and continuous addition of phosphoric acid to maintain the pH within the range 2.5 - 3.0. After 5 hours of proteolysis, ammonium hydroxide was added to adjust the pH to 7.0, the temperature fell to 50°C and 3 g of protease 2A (Amano) added under mixing. The proteolysis with protease 2A (Amano) was carried out for 8 hours, 50°C and continuous addition of ammonium hydroxide to maintain the pH within the range 6.5 - 7.3. After 8 hours of reaction, the proteolyzed soy protein was pasteurized at 100°C for 10 minutes, cooled down to 50°C and filtered with filter aid. Zeolite was used as filter aid at a ratio of 30% of final solids in hydrolyzed product.

The liquid obtained after filtration was spray dried under the following conditions:

| | |
|---|---|
| Product Inlet Temperature | 50°C |
| Product Outlet Temperature | 85°C |
| Air Inlet Temperature | 140°C |
| Air Outlet Temperature | 85°C |

The final powder moisture was 2.0%.

The final amount of ammonium hydroxide and phosphoric acid used were 40 ml and 30 ml respectively.

## Claims

1. A process for enhancing the salty taste of a food or beverage containing a less than normal amount but a minimum amount of 0.20 % of sodium chloride which comprises adding to the said food or beverage a sodium chloride taste enhancing amount of a proteolysed protein source.

2. A process according to claim 1 wherein the protein source is egg white, gelatin, soy protein, wheat protein, corn protein, fish protein, milk protein or meat protein.

3. A process according to claim 1 wherein the protein source is proteolysed under acid conditions and under alkaline conditions sequentially in any order.

4. A process according to claim 3 wherein the acid proteolysis is carried out at a pH of from 1 to 6 and at a temperature from 0° to 65°C.

5. A process according to claim 3 wherein the amount of protease used for acid proteolysis is from 0.005 to 4% by weight based on the weight of the protein source.

6. A process according to claim 3 wherein the duration of the acid proteolysis is from 2 to 48 hours.

7. A process according to claim 3 wherein the alkaline proteolysis is carried out at a pH of from 6 to 12 and at a temperature of from 0° to 70°C.

8. A process according to claim 3 wherein the amount of protease used for the alkaline proteolysis is from 0.005 to 4% by weight based on the weight of protein source.

9. A process according to claim 3 wherein the duration of the alkaline proteolysis is from 10 minutes to 24 hours.

10. A process according to claim 3 wherein, after termination of both stages of the proteolysis, an acid or an alkali are added to the proteolyzed protein source to form the corresponding salt.

11. A process according to claim 3, wherein, after termination of both stages of proteolysis, an acid and an alkali are added to the proteolysed protein source to form the respective salt.

12. A process according to claim 11 wherein phosphoric acid and ammonium hydroxide are added to form ammonium phosphate.

13. A process according to any of the preceding claims wherein the proteolyzed protein product is pasteurised.

14. A process according any of the preceding claims wherein the proteolyzed protein product is spray dried or liquid separated by centrifugation or filtration and dried.

15. A process for preparing a salt tasting food or beverage containing a reduced amount but a minimum amount of 0.20% of sodium chloride which comprises formulating a food or beverage with a reduced amount but a minimum amount of 0.20% of sodium chloride less than is necessary to achieve a desired salty taste in said food or beverage, and enhancing the sodium chloride taste in said reduced sodium chloride content food or beverage by adding thereto a proteolysed protein source.

16. A composition enhanced in sodium chloride taste which comprises a food or beverage containing a less than normal amount but a minimum amount of 0.20% of sodium chloride, and a sodium chloride taste enhancing amount of a proteolysed protein source.

## Patentansprüche

1. Verfahren zur Verbesserung des salzigen Geschmacks eines Nahrungsmittels oder Getränks mit einem unter dem normalen Niveau liegenden, jedoch minimalem Gehalt an Natriumchlorid von 0,20 %, welches umfaßt, Zusetzen einer den Kochsalzgeschmack verstärkenden Menge einer abgebauten Proteinquelle zu dem Nahrungsmittel oder dem Getränk.

2. Verfahren nach Anspruch 1, wobei die Proteinquelle Eiweiss, Gelatine, Sojaprotein, Weizenprotein, Getreideprotein, Fischprotein, Milchprotein oder Fleischprotein ist.

3. Verfahren nach Anspruch 1, wobei die Proteinquelle nacheinander in jeder Reihenfolge unter sauren Bedingungen und unter alkalischen Bedingungen abgebaut wird.

4. Verfahren nach Anspruch 3, wobei die saure Proteolyse bei einem pH-Wert von 1 bis 6 und bei einer Temperatur von 0 °C bis 65 °C durchgeführt wird.

5. Verfahren nach Anspruch 3, wobei die Menge an für die saure Proteolyse verwendeter Protease von 0,005 bis 4 Gew.-%, bezogen auf das Gewicht der Proteinquelle, beträgt.

6. Verfahren nach Anspruch 3, wobei die Dauer der sauren Proteolyse 2 bis 48 Stunden beträgt.

7. Verfahren nach Anspruch 3, wobei die alkalische Proteolyse bei einem pH-Wert von 6 bis 12 und bei einer Temperatur von 0 °C bis 70 °C durchgeführt wird.

8. Verfahren nach Anspruch 3, wobei die Menge an für die alkalische Proteolyse verwendeter Protease von 0,005 bis 4 Gew.-%, bezogen auf das Gewicht der Proteinquelle beträgt.

9. Verfahren nach Anspruch 3, wobei die Dauer der alkalischen Proteolyse von 10 Minuten bis 24 Stunden beträgt.

10. Verfahren nach Anspruch 3, wobei nach Beendigung beider Proteolyse-Schritte zu der abgebauten Proteinquelle Säure oder Alkali zugesetzt wird, um das entsprechende Salz zu bilden.

11. Verfahren nach Anspruch 3, wobei nach Beendigung beider Proteolyse-Schritte zu der abgebauten Proteinquelle Säure oder Alkali zugesetzt wird, um das jeweilige Salz zu bilden.

12. Verfahren nach Anspruch 11, wobei zur Bildung von Ammoniumphosphat Phosphorsäure und Ammoniumhydroxid zugesetzt werden.

13. Verfahren nach einem der vorhergehenden Ansprüche, wobei das abgebaute Proteinprodukt pasteurisiert wird.

14. Verfahren nach einem der vorhergehenden Ansprüche, wobei das abgebaute Proteinprodukt sprühgetrocknet oder durch Zentrifugation oder Filtration flüssig getrennt und getrocknet wird.

15. Verfahren zur Herstellung eines Nahrungsmittels oder Getränks mit salzigem Geschmack und einem verringertem, jedoch minimalem Gehalt an Natriumchlorid von 0,20 %, welches umfaßt, Zusammenstellen eines Nahrungsmittels oder Getränks mit einem verringertem, jedoch minimalem Gehalt an Natriumchlorid von 0,20 %, der unter dem Niveau liegt, der zur Erreichung eines gewünschten salzigen Geschmacks in dem Nahrungsmittel oder Getränks erforderlich ist, und Verstärken des Kochsalz-Geschmacks in dem Nahrungsmittel oder Getränk mit verringertem Natriumchlorid-Gehalt durch Zusetzen einer abgebauten Proteinquelle.

16. Zusammensetzung, deren Kochsalz-Geschmack verstärkt ist und die ein Nahrungsmittel oder ein Getränk mit einem unter dem normalen Niveau liegenden, jedoch einem minimalen Gehalt an Natriumchlorid von 0,20 %, und eine Kochsalz-Geschmack verstärkende Menge einer abgebauten Proteinquelle enthält.

## Revendications

1. Procédé pour accroître le goût salé d'un aliment ou d'une boisson contenant une quantité inférieure à la normale de chlorure de sodium, mais contenant une quantité minimale de chlorure de sodium de 0,20 %, qui comprend l'addition à cet aliment ou à cette boisson d'une quantité, augmentant le goût de chlorure de sodium, d'une source de protéines protéolysée.

2. Procédé suivant la revendication 1, dans lequel la source de protéines est le blanc d'oeuf, la gélatine, la protéine de soja, la protéine de blé, la protéine de maïs, la protéine de poisson, la protéine de lait ou la protéine de viande.

3. Procédé suivant la revendication 1, dans lequel la source de protéines est protéolysée dans des conditions acides et dans des conditions alcalines successivement dans n'importe quel ordre.

4. Procédé suivant la revendication 3, dans lequel la protéolyse acide est effectuée à un pH de 1 à 6 et à une température de 0° à 65°C.

5. Procédé suivant la revendication 3, dans lequel la quantité de protéase utilisée pour la protéolyse acide est comprise dans l'intervalle de 0,005 à 4 % en poids sur la base du poids de la source de protéines.

6. Procédé suivant la revendication 3, dans lequel la durée de la protéolyse acide est comprise dans l'intervalle de 2 à 48 heures.

7. Procédé suivant la revendication 3, dans lequel la protéolyse alcaline est effectuée à un pH de 6 à 12 et à une température de 0° à 70°C.

8. Procédé suivant la revendication 3, dans lequel la quantité de protéase utilisée pour la protéolyse alcaline est comprise dans l'intervalle de 0,005 à 4 % en poids sur la base du poids de la source de protéines.

9. Procédé suivant la revendication 3, dans lequel la durée de la protéolyse alcaline est comprise dans l'intervalle de 10 minutes à 24 heures.

10. Procédé suivant la revendication 3, dans lequel, après la fin des deux étapes de la protéolyse, un acide ou une substance alcaline est ajouté à la source de protéines protéolysée pour former le sel correspondant.

11. Procédé suivant la revendication 3, dans lequel, après la fin des deux étapes de la protéolyse, un acide et une substance alcaline sont ajoutés à la source de protéines protéolysée pour former le sel respectif.

12. Procédé suivant la revendication 11, dans lequel de l'acide phosphorique et de l'hydroxyde d'ammonium sont ajoutés pour former du phosphate d'ammonium.

13. Procédé suivant l'une quelconque des revendications précédentes, dans lequel le produit protéique protéolysé est pasteurisé.

14. Procédé suivant l'une quelconque des revendications précédentes, dans lequel le produit protéique protéolysé est séché par pulvérisation ou soumis à une séparation de liquide par centrifugation ou à une filtration et est séché.

15. Procédé pour la préparation d'un aliment ou d'une boisson au goût salé, contenant une quantité réduite de chlorure de sodium, mais contenant une quantité minimale de chlorure de sodium de 0,20 %, qui comprend la formulation d'un aliment ou d'une boisson avec une quantité réduite, mais une quantité minimale de 0,20 % de chlorure de sodium, inférieure à celle qui est nécessaire pour obtenir un goût salé désiré dans ledit aliment ou ladite boisson, et l'augmentation du goût de chlorure de sodium dans ledit aliment ou ladite boisson à teneur réduite en chlorure de sodium en y ajoutant une source de protéines protéolysée.

16. Composition ayant un goût de chlorure de sodium accru, qui comprend un aliment ou une boisson contenant une quantité inférieure à la normale de chlorure de sodium, mais contenant une quantité minimale de chlorure de sodium de 0,20 %, et une quantité, augmentant le goût de chlorure de sodium, d'une source de protéines protéolysée.
